Europäisches Patentamt

European Patent Office

Office européen des brevets

(19)

(11) Numéro de publication: **0 138 873**
**B1**

(12)

# FASCICULE DE BREVET EUROPEEN

(45) Date de publication du fascicule du brevet:
**17.02.88**

(51) Int. Cl.⁴: **F 03 D 7/02**

(21) Numéro de dépôt: **84901085.5**

(22) Date de dépôt: **13.03.84**

(86) Numéro de dépôt international:
**PCT/FR 84/00060**

(87) Numéro de publication internationale:
**WO 84/03739 (27.09.84** Gazette **84/23)**

(54) **AEROGENERATEUR MUNI D'UN DISPOSITIF A FORCE CENTRIFUGE LIMITEUR DE LA VITESSE DE ROTATION DE L'ARBRE DU CAPTEUR, ET MOYENS D'ARRET ET DE BLOCAGE DUDIT CAPTEUR ASSOCIES A UN TEL DISPOSITIF.**

(30) Priorité: **15.03.83 FR 8304203**

(43) Date de publication de la demande:
**02.05.85 Bulletin 85/18**

(45) Mention de la délivrance du brevet:
**17.02.88 Bulletin 88/7**

(84) Etats contractants désignés:
**AT BE DE GB NL SE**

(56) Documents cités:
**DE - C - 563 253**
**FR - A - 587 724**
**FR - A - 886 966**
**FR - A - 1 011 426**
**FR - A - 1 037 777**
**FR - A - 2 473 642**
**US - A - 2 126 202**

(73) Titulaire: **PROCEDES TECHNIQUES DE CONSTRUCTION, 9, Place des Ternes, F-75848 ParisCedex 17 (FR)**

(72) Inventeur: **D'ABOVILLE, Yanic, 19, avenue du Maréchal Douglas Haig, F-78000 Versailles (FR)**

(74) Mandataire: **Marquer, Francis et al, CABINET MOUTARD 35, avenue Victor Hugo Résidence Champfleury, F-78180 Voisins-le-Bretonneux (FR)**

EP 0 138 873 B1

## Description

L'invention se rapporte à un aerogénérateur muni d'un dispositif limiteur de la vitesse de rotation de l'arbre du capteur de l'éolienne. La réalisation à bon marché d'un aérogénérateur d'électricité de chauffage, associant une éolienne à un alternateur qui débite dans des résistances de chauffage, pose un certain nombre de problème qui n'ont pas été résolus jusqu'ici.

Dans la publication WO 84/03 738 (publiée le 27.09.84) déposée le même jour par la Demanderesse pour: «Dispositif de régulation d'une éolienne comportant un panneau de commande d'effacement basculant sous la commande d'un panneau auxiliaire», on a décrit un dispositif qui assure l'orientation, face au vent, dune hélice aval à pales fixes et axe horizontal sans gouvernail, et sa mise en drapeau à partir d'une vitesse supérieure prédéterminée du vent.

Avec un tel dispositif de régulation, il peut se produire accidentellement un emballement de l'hélice, même dans la limite autorisée de vitesse du vent, par exemple à la suite de la rupture d'une résistance de chauffage. Cela risque d'entraîner la détérioration de l'alternateur, du multiplicateur qui lui est associé, ou de l'hélice elle-même.

Pour supprimer ce risque, il a déjà été proposé d'équiper l'aérogénérateur d'un dispositif limiteur de vitesse à force centrifuge tel que, par exemple, celui décrit dans le brevet DE-C-563 253 qui fait intervenir un embrayage apte à accoupler l'arbre de l'hélice à un mécanisme destiné à orienter le rotor à l'égard de la direction du vent, cet embrayage étant actionné à partir de la force centrifuge développée par la rotation de l'hélice.

L'invention concerne plus précisément un aérogénérateur muni d'un dispositif de ce genre, comprenant une pièce munie de surfaces de friction et susceptible de se déplacer entre une position de débrayage et une position d'embrayage, sous l'action de la force d'une masse soumise à la force centrifuge développée par la rotation de l'hélice pour un seuil de vitesse prédéterminé de celle-ci, ladite pièce provoquant, en position d'embrayage, l'accouplement de l'arbre à un dispositif destiné à orienter l'hélice par rapport à la direction du vent, notamment en vue de la mettre en panne.

Selon l'invention, ce dispositif de l'aérogénérateur est plus particulièrement caractérisé en ce que ladite pièce est montée dans une boutonnière ménagée dans ledit arbre de façon à se déplacer le long de l'axe dudit arbre sous l'action de la force de traction exercée par un premier câble relié à une masse soumise à la force centrifuge développée par la rotation de l'hélice pour un seuil de vitesse prédéterminé de celle-ci, et en ce que ledit dispositif comprend en outre un plateau parallèle auxdites surfaces de friction et solidaire d'un cylindre supporté rotatif concentriquement à l'arbre par un palier fixe et entraîné en rotation lorsque ladite pièce est en position d'embrayage où ses surfaces de friction engagent ledit plateau, un second câble fixé au cylindre de manière à s'enrouler sur le cylindre, et un dispositif de mise en panne de l'hélice, commandé par le second câble.

Selon l'invention, la structure de l'hélice facilite la réalisation pratique d'un tel limiteur.

Suivant un mode d'exécution préféré, les pales de l'hélice sont supportées par des tubes à section carrée, l'arbre de l'hélice est creux, et ladite masse est montée coulissante dans l'un desdits tubes, tandis que ledit premier câble est guidé à l'intérieur dudit arbre creux et dudit tube.

Une fois l'hélice en drapeau, il est prudent, avant d'effecteur l'intervention qui fera cesser la cause de l'emballement, d'assurer son blocage complet.

Suivant un mode d'exécution préféré, le dispositif de blocage de l'hélice, se caractérise principalement par un sabot qui pénètre dans la structure de l'hélice, avantageusement entre deux tubes de pales consécutifs.

Ce dispositif de blocage est de préférence commandé manuellement au moyen d'un câble agissant sur un bras oscillant qui manœuvre le sabot et il peut être mis en service même sans que le dispositif limiteur soit intervenu, par exemple lorsqu'on veut effectuer des travaux d'entretien, ou en cas de tempéte.

Préférentiellement, la structure de supportage de l'hélice facilite la réalisation pratique de la commande manuelle de la mise en drapeau de l'hélice et du dispositif de blocage.

D'autres particularités, ainsi que les avantages de l'invention, apparaîtront clairement à la lumière de la description ci-après.

Au dessin annexé:

La figure 1 représente, vus en coupe, les organes essentieles d'un dispositif limiteur de vitesse conforme à un mode d'exécution préféré de l'invention;

La figure 2 est une vue d'ensemble d'un supportage comprenant une plate-forme fixée au sommet d'un mât tournant, et des organes supportés par cette plate-forme et le long de ce mât;

La figure 3 est une vue de dessous du sabot de blocage, et;

La figure 4 représente schématiquement et partiellement la structure de l'hélice.

Les mêmes numéros de référence désignent des éléments homoloques aux différentes figures.

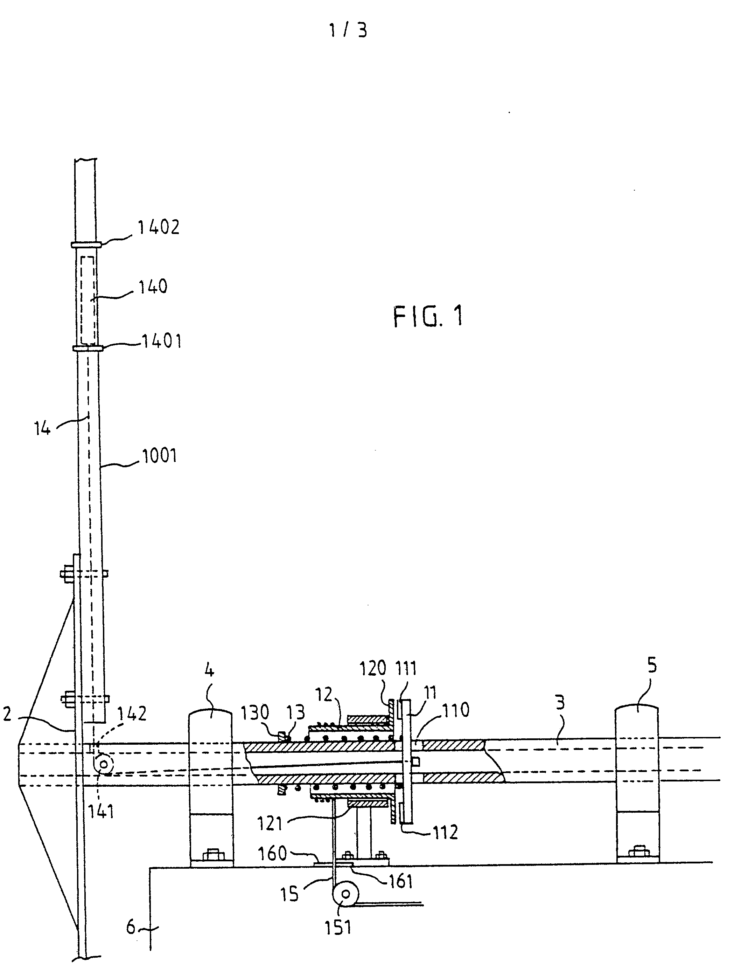

A la figure 1, on a représenté u dispositif limiteur de vitesse à force centrifuge comportant une tige 11 qui traverse l'arbre creux 3 de l'hélice d'un aérogénérateur, qui est par ailleurs conforme à la demande de brevet susvisée, dans une boutonnière 110; la tige 11 est munie, à ses deux extrémités, de deux surfaces de friction 111–112. Celles-ci coopèrent avec un plateyu d'embrayage 120 d'un cylindre 12 monté concentriquement à l'arbre 3, sans contact avec celui-ci, dans un palier 121 fixé à la plate-forme 6, elle-même fixée au sommet d'un mât tournant 9. Un ressort hélicoïdal 13 concentrique à l'arbre 3 et intérieur au cylindre 12 prend appui à une extrémité sur la tige 11 et, à l'autre extrémité, sur une butée 130 solidarisée à l'arbre 3.

Ce ressort maintient normalement la tige 11 éloignée du cylindre 12, qui est alors immobile. Un câble léger 14, fixé à une extrémité à la tige 11 et muni à son autre extrémité, d'une masse 140 montée coulissante à l'intérieur du tube 1001 qui supporte, comme on l'expliquera dans la suite, l'une des pales de l'hélice (ou de toute autre support tubulaire solidaire de la rotation de l'hélice), passe à l'intérieur de l'arbre 3, sur une poulie 141 et ressort au niveau des tubes de pales par un trou 142 percé dans l'épaisseur de l'axe 3. La distance entre le trou 142 et la masse 140 est de l'ordre de 1 à 2 m. La masse 140 ne peut coulisser qu'entre deux boulons 1401–1402 qui traversent le tube 1001. Elle est équilibrée, dans le tube de pale opposé, par une masse fixe non figurée. Pour une vitesse supérieure de sécurité de l'hélice (par exemple de l'ordre de 80 T/min), qui sera atteinte en cas de défaillance de la charge de l'alternateur, ce qui mettrait en danger ce dernier, le multiplicateur et l'hélice elle-même, la force centrifuge exercée sur le câble 14 fait coulisser la tige 11 dans la boutonnière, de façon à mettre en contact les surfaces de friction 111 avec le plateau d'embrayage 120, si bien que le cylindre 12 est entraîné en rotation. Un câble léger 15 s'enroule alors sur le cylindre 12 et exerce une traction qui déclenche la mise en service du dispositif d'effacement de l'hélice. Aussitôt l'effacement amorcé, l'hélice ralentit et le contact des surfaces de friction cesse.

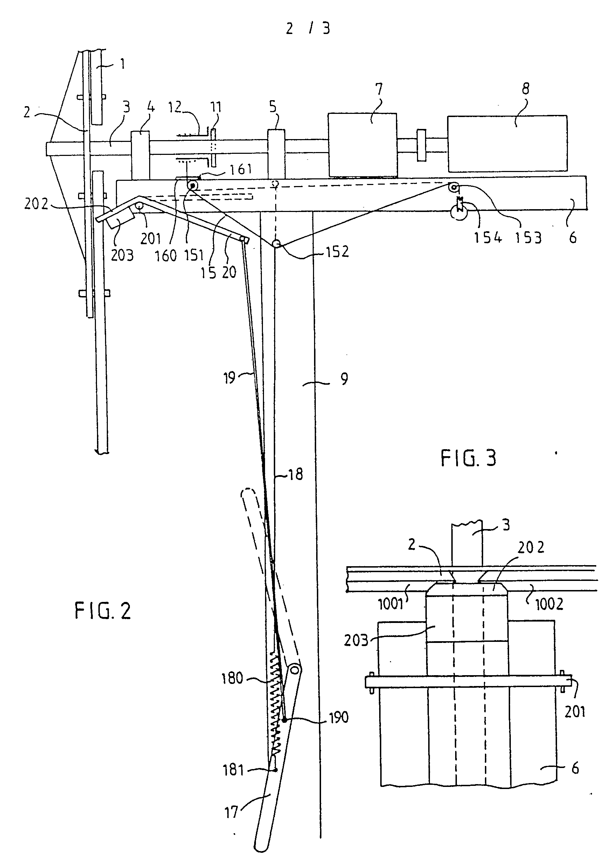

Avantageusement, le dispositif d'effacement de l'hélice est du type comportant un panneau dont le relevage a pour effet, sous l'action de la poussée du vent, d'orienter l'hélice de façon à la mettre en drapeau. Dans ce cas, le câble 15, qui passe sur des poulies de guidage telles que 151 à 154 (figures 1 et 2), traverse un organe de freinage unidirectionnel constitué par exemple, de manière très simple, par deux lèvres en matière élastique 160–161 et porté par la plate-forme 6. Grâce à ce frein, le câble 15 conserve sa position de relevage du panneau jusqu'à intervention humaine.

A la figure 2, où l'on voit un alternateur 8, un multiplicateur 7 et des paliers 4–5, et où le dispositif limiteur qui vient d'être décrit a été représenté de manière très schématique, on a représenté un dispositif qui permet l'arrêt manuel de l'hélice. Ce dispositif comprend: un levier 17 fixé de manière pivotante au bas du mât tournant 9 à la portée de l'opérateur; un premier câble 18 fixé en un point 181 du levier par l'intermédiaire d'un ressort 180 et, à son autre extrémité, à une poulie 152 passant sur le câble 15; un second câble 19 fixé en un point 190 du levier 17 et, à son autre extrémité, à un bras 20 disposé longitudinalement, sous la plate-forme 6, entre l'hélice et le mât. Ce bras est monté oscillant autour d'un axe 201 perpendiculaire à la plate-forme et situé dans le plan de celle-ci. A son extrémité opposée à celle où est attaché le câble 19, il est muni d'un sabot 202 conformé de manière à pouvoir s'emboîter sans heurt et fermement, au niveau du moyeu 2, entre deux tubes de pales consécutifs 1001–1002 (figure 8) ou pièces équivalentes de la structure de l'hélice. Le sabot 202 est muni à sa partie inférieure d'un contrepoids 203 qui le ramène en position dégagée lorsque le levier 181 est relevé.

L'opérateur, pour arrêter l'hélice, abaisse d'abord en position horizontale le levier 181, ce qui a pour effet d'exercer une traction sur les câbles 18 et 15. Il en résulte que le panneau du dispositif d'effacement se relève et que l'hélice se met en drapeau. Lorsque l'hélice est arrêtée ou presque si nécessaire grâce à une orientation complémentaire du mât effectuée manuellement à l'aide du levier 181, l'opérateur abaisse ensuite le levier à fond de façon à engager le sabot et à bloquer l'hélice. Le panneau est maintenu vertical par la traction du ressort 180, qui a absorbé la deuxième partie de la course du levier.

Ce dispositif d'arrête manuel de l'hélice en vue d'effectuer une intervention, permet aussi de la remettre en route après que, le dispositif de limitation de vitesse s'étant déclenché par suite d'une anomalie dans la charge, cette anomalie a été éliminée. Pour obtenir la remise en route, il suffit alors de tirer sur le câble 18; en effet, cette action, qui s'exerce à un moment où le panneau du dispositif de régulation (ou équivalent) est relevé et le câble 15 enroulé sur le cylindre 12 et coïncé par l'organe de freinage 160–161, a pour effet de dérouler le câble 15, donc de permettre au panneau de basculer en position horizontale sous l'effet de son poids.

On notera qu'il existe finalement une coopération étroite entre le dispositif de limitation de vitesse, le dispositif d'effacement de l'hélice décrit dans la demande de brevet susvisée et le dispositif d'arrêt manuel que l'on vient de décrire. En effet: le dispositif de limitation de vitesse utilise le panneau principal du dispositif d'effacement pour mettre l'hélice en drapeau en cas de dépassement de la vitesse de rotation de l'hélice autorisée; le dispositif d'arrêt manuel comporte des moyens de déclencher la mise en drapeau préalable de l'hélice par le dispositif d'effacement, par la manœuvre du levier qui assurera ensuite le blocage de l'hélice pratiquement arrêtée, et des moyens de faire cesser l'action du dispositif d'effacement lorsqu'il a été déclenché par le dispositif limiteur. Grâce à cette coopération, la réalisation des dispositif limiteur et d'arrêt manuel est simplifiée au maximum et leur efficacité rendue optimale. Toutefois, il doit être bien compris que chacun de ces dispositifs pourrait être que utilisé sans que les deux autres le soient, en coopération avec d'autres moyens qui leur seraient substitués pour remplir des fonctions équivalentes, avec toutefois des réalisations plus complexes et des performances moindres.

L'utilisation d'un mât tournant facilite évidemment la transmission, depuis le sol, de la commande manuelle du sabot d'arrêt et du câble 15 de commande de basculement du panneau d'effacement: les câbles 18 et 19 suivent ainsi automatiquement les déplacements de leur points d'attache respectifs 152 et 20, solidaires de la plate-forme tournante.

L'utilisation d'un mât tournant supprime par ailleurs la nécessité de prévoir un pivot ou une couronne d'orientation de la plate-forme et permet d'installer au niveau du sol le collecteur du courant engendré par l'alternateur.

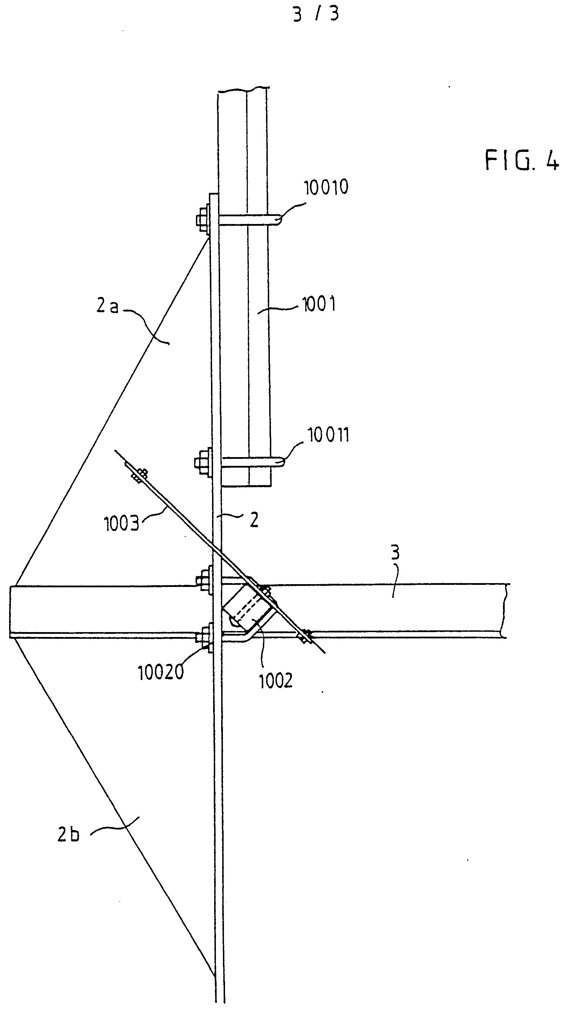

A la figure 4, on a représenté le moyeu 2 et l'arbre 3 de l'hélice. L'arbre 3 est constitué d'un tube creux ayant par exemple 65 mm de diamètre, pour une hélice de 6 m de diamètre comportant 10 pales. Le moyeu en tôle 2, et ses équerres de renforts telles que 2a, 2b, sont soudés sur cet arbre. Sur la face du moyeu située du côté de la plate-forme sont fixés des tubes 1001–1002 de section carrée, ayant par exemple 30 ou 40 mm de côté, au moyen de brides boulonnées 10 010, 10 011, respectivement 10 020, à cheval sur le pied du tube. Ces tubes sont vrillés avant montage. Les pales proprement dites, réalisées par exemple en tôle de «Duralinox» (marque déposée) de 1 mm d'épaisseur, sont boulonnées sur des traverses telles que 1003, elles-mêmes boulonnées sur chaque tube. Cette construction permet de réaliser une hélice de faible poids (170 kg dans l'exemple considéré), facile à monter à partir d'éléments séparés. L'assemblage est stable, les brides réalisant un auto-serrage s'opposant au glissement des tubes sous l'action de la force centrifuge.

On notera que les pales sont à pas fixe, d'où la nécessité d'utiliser un dispositif d'effacement assurant une régulation en fonction de la vitesse du vent. On notera par ailleurs que la présence de tubes de pales permet le guidage commode des câbles de commande de l'embrayage et de relevage du panneau et le blocage de l'hélice par emboîtement du sabot entre deux tubes de pales consécutifs.

L'alternateur est du type triphasé rapide. Il s'agit avantageusement d'un alternateur de série, à bagues et balais, avec régulation, produisant, entre 1000 et 4000 T/mn environ, un courant alternatif variable de 0 à 600 V environ. Comme un tel alternateur n'est pas étanche, la plate-forme est recouverte d'un capot étanche (non figuré) offrant une surface de refroidissement d'air suffisante pour permettre à l'alternatuer de se refroidir en atmosphère close.

**Revendications**

1. Aérogénérateur muni d'un dispositif limiteur de la vitesse de rotation de l'arbre (3) de l'hélice, ce dispositif comprenant une pièce munie de surfaces de friction et susceptible de se déplacer entre une position de débrayage et une position d'embrayage, sous l'action de la force d'une masse soumise à la force centrifuge développée par la rotation de l'hélice pour un seuil de vitesse prédéterminé de celle-ci, ladite pièce provoquant, en position d'embrayage, l'accouplement de l'arbre à un dispositif destiné à orienter l'hélice par rapport à la direction du vent, notamment en vue de la mettre en panne, caractérisé en ce que ladite pièce (11) est montée dans une boutonnière (110) ménagée dans ledit arbre de façon à se déplacer le long de l'axe dudit arbre sous l'action de la force de traction exercée par un premier câble (14) relié à une masse (140) soumise à la force centrifuge développée par la rotation de l'hélice pour un seuil de vitesse prédéterminé de celle-ci, et en ce que ledit dispositif comprend en outre un plateau (120) parallèle auxdites surfaces de friction et solidaire d'un cylindre (12) supporté rotatif concentriquement à l'arbre (3) par un palier fixe (121) et entraîné en rotation lorsque ladite pièce (11) est en position d'embrayage où ses surfaces de friction (111–112) engagent ledit plateau (120); un second câble (15) fixé au cylindre (12) de manière à s'enrouler sur le cylindre; et un dispositif de mise en panne de l'hélice, commandé par le second câble (15).

2. Aérogénérateur selon la revendication 1, caractérisé en ce que l'arbre (3) est creux, l'hélice comporte au moins un tube radial (1001), dans lequel ladite masse (140) est montée colissante et le premier câble (14) est guidé à l'intérieur de l'arbre creux et dudit tube radial.

3. Aérogénérateur selon la revendication 1 ou 2, caractérisé en ce que ladite pièce (11) est une tige qui traverse radialement ledit arbre (3) et est munie d'une surface de friction (111–112) à chaque extrémité.

4. Aérogénérateur selon la revendication 2 ou 3, caractérisé en ce que, les pales de l'hélice étant supportées par des tubes à section carrée, ledit tube radial (1001) est constitué par l'un desdits tubes de pales, dont l'extrémité inférieure s'ouvre au voisinage d'un orifice (142) de passage du premier câble à travers l'épaisseur de l'arbre creux (3).

5. Aérogénérateur selon l'une des revendications 1 à 4, caractérisé en ce que ledit second câble (15) passe à travers un frein unidirectionnel, qui bloque sa position après enroulement sur une longueur suffisante pour que le dispositif de mise en panne soit mis en service, et qu'un ressort (13) rappelle ladite pièce (11) en position de débrayage dès que l'hélice a ralenti en dessous dudit seuil de vitesse.

6. Aérogénérateur selon la revendication 5, caractérisé par des moyens (câble de manœuvre 18) d'exercer une traction manuelle sur ledit second câble (15) pour le détendre et mettre ainsi hors service le dispositif de mise en panne lorsque la cause de dépassement du seuil de vitesse a cessé.

7. Aérogénérateur selon l'une des revendications 1 à 6, caractérisé en ce qu'il est associé à des moyens à commande manuelle agencés pour faire pénétrer un sabot de blocage (202) dans la structure de l'hélice après mise en drapeau de celle-ci par l'exercice d'une traction sur ledit second câble (15).

8. Aérogénérateur selon la revendication 7, caractérisé en ce que ledit sabot (202) est manœuvré par un bras oscillant (20) lui-même commandé par un câble (19) et muni d'un contrepoids de rappel (203).

9. Aérogénérateur selon les revendications 4 et 7, caractérisé en ce que ledit sabot (202) est conformé de manière à s'emboîter au niveau du moyeu entre deux tubes à section carrée consécutifs.

10. Aérogénérateur selon l'une des revendications 1 á 9, caractérisé en ce que ledit arbre (3) est supporté, au moyen de paliers (4–5), par une plate-forme horizontale (6) fixée au sommet d'un mât tournant (9), que ledit palier fixe (121) et ledit frein (160–161) sont supportés par ladite plate-forme, laquelle supporte également un multiplicateur (7) et un alternateur (8) couplés audit arbre (3).

11. Aérogénérateur selon les revendications 6 et 10, caractérisé en ce que ledit câble de manœuvre (18), ainsi que ledit troisième câble (19), descendent le long dudit mât (9), pour être actionnés depuis le sol au moyen d'un levier oscillant (17), lui-même supporté par ledit mât tournant et auquel il sont attachés.

12. Aérogénérateur selon la revendication 11, caractérisé en ce que ledit levier oscillant (17), dans une première partie de sa course, actionne ledit câble de manœuvre (18) et, dans une seconde partie de sa course, actionne ledit troisième câble (19) de commande du bras oscillant, ledit câble de manœuvre (18) étant relié audit levier (17) par un ressort (180) qui absorbe la seconde partie de sa course.

13. Aérogénérateur selon la revendication 10, caractérisé en ce que ledit seuil de vitesse est imposé par la vitesse de rotation autorisée pour l'alternateur (8), compte tenu du coefficient de multiplication du multiplicateur (7).

14. Aérogénérateur selon la revendication 10 ou 13, caractérisé en ce que l'alternateur (7) est d'un type non étanche et la plate-forme (6) est munie d'un capot étanche.

**Patentansprüche**

1. Windturbine mit einer Vorrichtung zur Begrenzung der Drehgeschwindigkeit des Schaftes (3) des Propellers, wobei diese Vorrichtung ein Organ mit Reibungsflächen besitzt, das zwischen einer entkuppelten und einer gekuppelten Stellung beweglich ist, unter der Wirkungskraft einer Masse, die der, von der Propellerdrehung für eine vorbestimmte Grenzgeschwindigkeit desselben entwickelten Fliehkraft unterworfen ist, wobei das besagte Teil in der gekuppelten Stellung die Kupplung des Schaftes mit einer Vorrichtung bewirkt, welche den Propeller entsprechend der Windrichtung einstellt und ihn insbesondere rückstellt, dadurch gekennzeichnet, dass besagtes Teil (11) in einer in besagtem Schaft angebrachten Aussparung (110) so angeordnet ist, dass es sich, unter der Wirkung der von einem ersten Kabel (14) ausgeübten Zugkraft entlang der Achse des besagten Schaftes bewegt, wobei das Kabel mit einer Masse (140) verbunden ist, welche der von der Drehung des Schaftes für eine vorbestimmte Grenzgeschwindigkeit desselben entwickelten Fliehkraft unterworfen ist und dass besagte Vorrichtung ausserdem eine Platte (120) enthält, die parallel zu besagten Reibungsflächen ausgerichtet und fest mit einer Rolle (12) verbunden ist, die konzentrisch zum Schaft (3) drehbar auf einem unbeweglichen Lager (121) ruht und in Drehung versetzt wird, wenn besagtes Teil (11) sich in der gekuppelten Stellung befindet, in der seine Reibungsflächen (111–112) mit besagter Platte (120) zusammenarbeiten; ein zweites Kabel (15), das so an der Rolle (12) befestigt ist, dass es auf die Rolle aufgewickelt wird; und eine vom zweiten Kabel (15) gesteuerte Vorrichtung, um den Propeller rückzustellen.

2. Windturbine nach Anspruch 1, dadurch gekennzeichnet, dass der Schaft (3) hohl ist, der Propeller mindestens ein Radialrohr (1001) besitzt, in dem besagte Masse (140) gleiten kann und das erste Kabel (14) im Inneren des hohlen Schaftes und des besagten Radialrohres geführt wird.

3. Windturbine nach Anspruch 1 oder 2, dadurch gekennzeichnet, dass besagtes Teil (11) eine Stange ist, die radial besagten Schaft (3) durchquert und an jedem Ende mit einer Reibungsfläche (111–112) versehen ist.

4. Windturbine nach Anspruch 2 oder 3, dadurch gekennzeichnet, dass die Propellerflügel, welche durch Rohre mit viereckigem Querschnitt getragen werden und besagtes Radialrohr (1001) von einem der Flügelrohre gebildet wird, dessen unteres Ende in der Nähe eines Durchlasses (142) für das erste Kabel zur Durchquerung der Dickenabmessung des hohlen Schaftes (3) offen ist.

5. Windturbine nach einem der Ansprüche 1 bis 4, dadurch gekennzeichnet, dass besagtes zweites Kabel (15) durch eine Einwegbremse geführt wird, die es, nachdem eine Länge aufgerollt wurde, die genügt, um die Rückstellvorrichtung in Betrieb zu setzen, in seiner Stellung blockiert, und dass eine Feder (13) besagtes Teil (11) in die entkuppelte Stellung zurückversetzt, sobald der Propeller besagte Grenzgeschwindigkeit unterschreitet.

6. Windturbine nach Anspruch 5, gekennzeichnet durch Mittel (Betätigungskabel 18), um auf besagtes zweites Kabel (15) von Hand einen Zug auszuüben, um es zu entspannen und so die Rückstellvorrichtung ausser Betrieb zu setzen, wenn die Ursache der Grenzgeschwindigkeitsüberschreitung nicht mehr besteht.

7. Windturbine nach einem der Ansprüche 1 bis 6, dadurch gekennzeichnet, dass ihr Steuermittel von Hand zugeordnet sind, die so angeordnet sind, dass ein Sperrschuh (202) in die Propellerstruktur eingeführt wird, nachdem diese durch Zug an besagtem zweiten Kabel (15) rückgestellt wurde.

8. Windturbine nach Anspruch 7, dadurch gekennzeichnet, dass besagter Schuh (202) von einem Schwingarm (20) betätigt wird, der seinerseits von einem Kabel (19) gesteuert wird und mit einem Rückstell-Gegengewicht (203) versehen ist.

9. Windturbine nach den Ansprüchen 4 und 7, dadurch gekennzeichnet, dass besagter Schuh (202) so ausgebildet ist, dass er sich, in Höhe der Nabe, zwischen zwei benachbarte Rohre mit viereckigem Querschnitt einschiebt.

10. Windturbine nach einem der Ansprüche 1 bis 9, dadurch gekennzeichnet, dass besagter Schaft (3) durch Lager (4–5) auf einer waagerechten Plattform (6) ruht, welche auf der Spitze eines drehbaren Mastes (9) befestigt ist, dass besagtes festes Lager (121) und besagte Bremse (160–161) auf besagter Plattform ruhen, auf die sich ebenfalls ein Übersetzungsgetriebe (7) und ein Generator (8) stützen, die mit besagtem Schaft (3) gekuppelt sind.

11. Windturbine nach den Ansprüchen 6 und 10, dadurch gekennzeichnet, dass besagtes Betätigungskabel (18), sowie das dritte Kabel (19) den besagten Mast (9) herabgeführt werden, um vom Boden aus durch einen Schwinghebel (17) betätigt zu werden, der sich seinerseits auf besagtem drehbaren Mast befindet und an dem sie befestigt sind.

12. Windturbine nach Anspruch 11, dadurch gekennzeichnet, dass der Schwinghebel (17) im ersten Teil seines Hubs besagtes Betätigungskabel (18) betätigt und im zweiten Teil seines Hubs das dritte Kabel (19) zur Steuerung des Schwingarms, wobei besagtes Betätigungskabel (18) mit besagtem Hebel (17) durch eine Feder (180) verbunden ist, die den zweiten Teil seines Hubs absorbiert.

13. Windturbine nach Anspruch 10, dadurch gekennzeichnet, dass besagte Grenzgeschwindigkeit durch die für den Generator (8) zulässige Drehgeschwindigkeit festgelegt wird, unter Inbetrachtziehung des Übersetzungskoeffizienten des Übersetzungsgetriebes (7).

14. Windturbine nach Anspruch 10 oder 13, dadurch gekennzeichnet, dass der Generator (8) nicht undurchlässig ist und die Plattform (6) eine undurchlässige Haube besitzt.

**Claims**

1. A wind generator having a device for limiting the rotation speed of the shaft (3) of the propeller, said device comprising a member provided with friction surfaces and adapted to move between a disengaged and an engaged position, under the action of the force of a mass subjected to the centrifugal force developed by the rotation of the propeller for a predetermined speed threshold of this latter, said member causing, in the engaged position, the engagement of the shaft with a device adapted for orientating the propeller as a function of the direction of the wind and especially to feather the same, characterized in that said member (11) is mounted in a hole (110) provided in said shaft so as to be able to move along the axis of said shaft, under the action of the pulling force exerted by a first cable (14) connected to a mass (140) subjected to the centrifugal force developed by the rotation of the propeller for a predetermined threshold of this latter, and in that said device further comprises a plate (120) parallel to said friction surfaces and integral with a cylinder (12) supported for rotation concentrically to the shaft (3) by a fixed bearing (121) and rotated when said member (11) is in the engaged position, in which its friction surfaces (111–112) engage said plate (120), a second cable (15) secured to the cylinder (12) so as to wind around said cylinder, and a device for feathering the propeller, driven by said second cable (15).

2. The wind generator as claimed in claim 1, characterized in that the shaft (3) is hollow, the propeller comprises at least a radial tube (1001) in which said mass (140) is slidingly mounted and in that the first cable (14) is guided inside the hollow shaft and the radial tube.

3. The wind generator as claimed in claim 1 or 2, characterized in that said member (11) is a rod which goes radially through said shaft (3) and has a friction surface (111–112) at each end.

4. The wind generator as claimed in claim 2 or 3, characterized in that, the blades of the propeller being carried by square-sectional tubes, said radial tube (1001) is formed by one of said blade tubes, whose lower end opens in the vicinity of an aperature (142) for the passage of the first cable through the thickness of the hollow shaft (3).

5. The wind generator as claimed in one of claims 1 to 4, characterized in that said second cable (15) goes through a unidirectional break which blocks its position after a length has been wound up, sufficient for putting into action the feathering device, and in that a spring (13) resets said member (11) into its disengaged position as soon as the propeller has slowed down below said speed threshold.

6. The wind generator as claimed in claim 5, characterized by means (operating cable 18) for exerting a manual pull on said second cable (15) for slackening it and thus putting out of operation the feathering device when the cause for exceeding the speed threshold does no longer exist.

7. The wind generator as claimed in one of claims 1 to 6, characterized in that it is associated with manual control means adapted for inserting a blocking shoe (202) into the propeller structure, after it has been feathered by exerting a pulling action on said second cable (15).

8. The wind generator as claimed in claim 7, characterized in that said shoe (202) is operated by an oscillating arm (20) itself controlled by a cable (19) and provided with a resetting counterweight (203).

9. The wind turbine as claimed in claims 4 and 7, characterized in that said shoe (202) is shaped so as to fit, at the level of the boss, between two successive square-sectional tubes.

10. The wind generator as claimed in one of claims 1 to 9, characterized in that said shaft (3) is carried, by means of bearings (4–5), by a horizontal platform (6) secured to the top of a rotatable mast (9), in that said fixed bearing (121) and said break (160–161) are carried by said platform, which also carries a multiplier (7) and an alternator (8) coupled to said shaft (3).

11. The wind turbine as claimed in claims 6 and 10, characterized in that said operating cable (18), as well as said third cable (19), come down along said mast (9) so as to be operated from the ground by means of an oscillating lever (17), itself carried by said rotatable mast and to which they are fixed.

12. The wind turbine as claimed in claim 11, characterized in that said oscillating lever (17), during the first part of its course, operates said operating cable (18) and, during the second part of its course, operates the third cable (19) for controlling the oscillating arm, said operating cable (18) being connected to said lever (17) by a spring (180) which absorbs the second part of its course.

13. The wind turbine as claimed in claim 10, characterized in that said speed threshold is imposed by the rotation speed authorized for the alternator (8), account taken of the multiplication coefficient of the multiplier.

14. The wind turbine as claimed in claim 10 or 13, characterized in that the alternator (8) is of a non air-tight type and in that the platform (6) has an air-tight cover.

FIG. 1

FIG. 2

FIG. 3

FIG. 4